# EUROPEAN PATENT SPECIFICATION

(11) **EP 3 531 029 B1**
(45) Date of publication and mention of the grant of the patent: **11.08.2021**
(21) Application number: 17862163.7
(22) Date of filing: 22.05.2017
(51) Int. Cl.: F24D 1/02, F25B 29/00, F25B 15/04

(54) **SUBATMOSPHERIC HEATING AND COOLING SYSTEM**
UNTERDRUCKHEIZ- UND -KÜHLSYSTEM
SYSTÈME DE FOURNITURE DE CHALEUR ET DE FROID SUBATMOSPHÉRIQUE

(30) Priority: 19.10.2016 RU 2016140986
(43) Date of publication of application: 28.08.2019
(73) Proprietor: "ENERGY OF VACUUM" LIMITED LIABILITY COMPANY, Moscow, 121205 (RU)
(72) Inventor: Van, Igor Wu-Yunovich, Moscow 119285 (RU); Khan, Anton Viktorovich, Taraz 080020 (KZ); Khan, Lyubov Viktorovna, Taraz 080000 (KZ); Khan, Viktor Konstantinovich, Taraz 080000 (KZ)
(74) Representative: Chimini, Francesco
(86) International application number: PCT/RU2017/000334
(87) International publication number: WO 2018/074945

(56) References cited:
- CN-U- 205 536 297
- DE-A1- 3 204 230
- RU-C1- 2 426 033
- SU-A1- 97 555
- US-A- 4 665 709
- US-A- 4 953 361
- US-A- 5 666 818

## Description

Innovation is referred to the heat-and-power engineering sphere, particularly, to energy-saving technologies.

Heat and cold supply subatmospheric system is designed for heat flow conductivity from thermal energy source to consumables for heating and hot water supply as well as heating supply subsystem in line with cold water supply subsystem and serves for domestic, public and industrial buildings, greenhouses, cattle farms, etc, autonomous heat and cooling supply.

Vacuum-steam method of high efficiency heat flow conductivity is taken as a ground, based on vapor- condensation opened cycle with molar heat transfer high-rate by steam.

Subatmospheric system of heat-cold transfer gives possibility to control vacuum (pressure drop) level inside the system, thus giving possibility to perform both variable flow control and constant variable temperature control of hot stream- steam.

Heating and Cooling supply subatmospheric system consists of two subsystems - heat supply and cold supply, the basis of which is developing of adjustable by pressure drop rate (inside heat supply system) and moisten air forced removal with formation of continuous by rate moisten water forced removal in air coolers indirect evaporating cooling sections, steam supply to heaters heating devices, hot water supply (HWS) heat-exchange units, heat-exchange unit of pumpless ammonia-water absorption refrigerating machine (AWARM), water separator unit and deaerator unit from heat supply subsystem, air coolers units with cooled water controlled supply and energizing for processes and blocking operation - instrumentation devices.

Cold supply subsystem, in particular, AWARM unit, uses the heating energy produced by heat supply subsystem with the use of energy source (natural gas, coal, etc) for cold creation. High energy efficiency is achieved by the indirect steam cooling method with the use of precooled water produced with the use of pumpless AWARM of low evaporative efficiency, involving vacuum water ring pump (WRP) and boosting entry into the air coolers sections of supplied cooled mix of water and air in order to create inside sections reduced pressure under presence of which water intensive evaporation is originated from sections internal walls capillary-porous coating as well as capillary-porous structure water saturation rate is increased.

Due to above mentioned provisions the heat supply subsystem coefficient of efficiency is 0,9 and energy efficiency rate (EER) of cold production with the use of indirect- steam cooling reaching the index of 12,5.

System EER as well as provided by the use of steam water pump (SWP) in order to rise condensate into the steam boiler vapor boiler where burner device with energy unit with energy source is used (natural gas, fuel oil, coal, etc).

As envisioned by invention the steam boiler and AWARM unit are located on the building roof (according to the standards, regulations and specifications requirements and for emergency when ammonia leakage is inherent).

It is also important that the cold water subsystem consumes minimum quantity of distillate or soft water.

The known vacuum-steam system which includes: boiler with steam drum, heating devices, connected by valves with steam line, steam trap with condense pipe and unit for vacuum creation (RU Patent N°2195608, F24D 1/00, dated 27.12.2002). This system is duffer with great specific quantity of metal and high probability of tightness loss. The system does not provide for utility consumption control and boiler explosion prevention. Further sub-atmospheric heating and cooling systems are known from documents US4665709A and CN205536297U.

The unit for heating with vacuum steam is known (input document - publication, posted on the Internet, site: ngpedia.ru/id427980p1.html "Vacuum-steam system. Great Encyclopedia of Oil and Gas "). The unit consists of: steam boiler, distribution line, risers for steam supply, heating devices, risers for condensate drain, filter, vacuum-pump, air cooler. This system insufficiency is that the continuously operating vacuum pump, consuming the significant quantity of power, is connected in sequence via air-purge drum with steam boiler. There is a serious possibility of cavitation incipient, due to the pump in this system pumps in this system not only air, steam and hot condensate. The air-purge drum during air release to atmosphere ineffectively returns condensate into the steam boiler under overpressure and under absolute pressure in boiler, less than atmospheric, there is the great probability of outer air intake into the boiler. The boiler explosion safety system is not foreseen.

The closest analogue of our heat supply subsystem is the well known vacuum-steam system (input document P.N.Kamenev, A.N. Skanavy, V.N.Bogoslovskiy «Heating and Ventilation, part 1» Moscow, Stroyizdat, 1975), which system includes: steam boiler, piping vapor-condensation system with heating devices, steam traps, boiler blowdown drum, system data control unit, water ring pump for reduced pressure creation and condensate pumping. This system's disadvantages - high probability of tightness loss via vacuum ring pump sealing devices as well as impossibility of pressure diaphragm control of vacuum different values, as under this control instrument use pump on/off will be only for one definite value of set exhausting, for another exhausting value the control instrument reset will be required. Under vacuum water ring pump switching off for the indefinite time the condensate supply to the boiler will be stopped as the pump is connected to the boiler in a sequential order. The pump should be in operation, permanently consuming the great quantity of power. Restrictions on heat supply station arrangement with steam boiler only in the underground accommodation due to restriction of condensate return into the boiler under steam backpressure to in vacuum pump due to restriction of condensate return into the boiler under steam backpressure to in vacuum pump in flow line.

The system of heat-cold supply is known which contains: installed on trunk gas piping line vortex tube after installation of gas preliminary preparation unit, heating system and hot water supply, equipped with heating devices, heat exchanger and pump as well as cold supply system with coil in cooler and pump, all these elements are connected with direct and return piping (RF Patent N°2258185, site www.findpatent.ru/patent/225/2258185.html). This innovation scope of application is restricted by necessity of trunk gas lines availability in order to create heat and cold to use natural gas high pressure power.

Multiprocessing system of heat and cold supply is known which differ by that two outer piping with the purpose of heat-transport medium in winter and cooling medium in summer are connected both to heat supply source and cold supply source (USSR Patent N°87349). This innovation major fault is the availability of heating and cold supply centralized system with great scope of heat transfer medium transportation.

Air conditioner cold supply system is known which contains expanders, connected with the use of trunk with installed on it pumps, returned and mixing valves to air washers, equipped with trays with equalizing piping and to cold accumulator with circulation loop and air washer pumps connected to piping of heated cooling medium with returned valve to cold accumulator, differ in the fact that with the purpose of gain in performance by way of continuous supply of cooling medium to air washers and pressure keeping in cold accumulator close to atmospheric, the system additionally contains by-pass piping (SU Patent N°1361441A1, F24, F11/00).

This system disadvantage is the use of cooling medium great quantity of air washers feeding and four pumps use.

The closest prototype is the innovation «System of Heat Supply and Cold Supply" (RU Patent N°2426033, dated 10.08.2011). System of heat supply and cold supply which consists of heating unit with circulation pump and heat exchanger, supplying and returned pipelines, heating devices, shutoff and control valves, absorption refrigerating machine with cooling system equipped with circulation pump and thermostat, switching over, depending from the temperature, heat-transport medium flow into heating devices or into cooling device, differed by the fact that absorption refrigerating machine is connected by generator (heater) into the supplying heat piping and output from the generator is connected to thermostat, which depending from the temperature inside the premise is switching off heat-transport medium flow direction or into the heating devices, and/or returned line. This system disadvantage is: that due to heat and cooling medium the great volume of water is used, possessing significant inertia under heat or cold transfer, use of absorption refrigerating machine and circulation pumps of high capacity.

The closest prototype used by the steam-water pump is the invention (RU Patent N° 2406040). "A method for pumping a liquid through a piping through which a piping is connected to a sealed tank is filled with the pumped liquid, heated until the steam is formed, and with this steam expels the liquid from the tank to the supply line of the piping. And then the steam condenses with the formation of a vacuum and by means of this vacuum the liquid from the return line of the pipeline is sucked into the tank, characterized in that in order to ensure complete displacement of the liquid from the tank and subsequent full and rapid filling of the tank with sucked liquid in the tank by changing the quantity of vaporized liquid creates a pressure that ensures the escape of steam from the tank to the supply line of the piping after displacement of the liquid from the tank". The disadvantage of this is a long cycle of self-cooling with outer air to form a vacuum (without vacuum it is impossible to pump water into the pump).

The closest prototype of the air cooler used by us is the invention (RU Patent N° 2221969, dated January 20, 2004) "Apparatus for indirect evaporative air cooling", comprising a housing with inlet and outlet nozzles for the main and secondary airflows, inbuilt package of plates forming dry and moist channels, at least, one transversal row of longitudinally placed in the humid channels, located in the plate package middle part are intercommunicated plates connected to each other, which walls are formed by plates, and means for sub-water and water drainage into these containers, characterized in that the containers are intercommunicated to each other by means of tubular elements placed in dry channels". The disadvantage of which is the obligatory availability of cooling tower, powerful ventilation and pumping equipment, metal great specific quantity per structure.

Invention objective is to create a system of heat and cold supply with efficient use of energy carrier (natural gas, electricity, etc.), low-cost materials use, reliable and safe operation, creating conditions for easy installation, simplicity in maintenance and operation, use as much as possible expensive equipment during operation time, for example, a steam boiler; the possibility to locate a steam boiler and an absorption water-cooling machine in both the basement, floor and roof versions of high-rise buildings.

The technical result is achieved by the fact that the heat flow transfer is carried out by vacuum-vapor method with adjustable vacuum depth (pressure drop) based on thermal energy superconductivity with a high heat transfer coefficient from the heat source to consumers via an open circulatory system of pipelines (steam lines and condensate lines), vacuum-steam heat transfer method application allows to reduce power consumption due to thermal energy transfer high speed both to the heated premises system and hot water supply (HWS), and the cooling supply subsystem, excluding pumps for high-capacity coolant circulation, such as in a water heating system with high hydrostatic pressure; for transporting coolant device (evacuated steam) inexpensive materials use (low-carbon steel pipes, plastic pipes, conventional fittings and shut-off steam fittings, etc); vacuum water ring pump use that runs periodically when the heat supply subsystem is continuously operating and when cooling supply subsystem with an automatic control system is in operation, depending on the system required condition (summer and winter service periods) and the set vacuum parameters to achieve coolant temperature not exceeding 90 °C; automatic regulation block input to transfer energy carrier into the steam boiler, allows to make the central quantitative regulation by the expense of the heat-carrier-steam; energy supply blocking system input and the boiler charging with the calculated strictly dosed amount of the intermediate heat carrier (water) ensures boiler explosion safety; filling of intermediate heat carrier small quantity reduces the energy carrier's cost for steam generation, which leads to significant savings in water resources compared to a water heating system. The usage of steam-water pump to return the condensate to the steam boiler allows to locate the heat point both in the basement, and in the floor and roof versions, as the steam-water pump could create backup required pressure, depending on the required transport height, due to the condensate column the self-overcoming hydrostatic pressure appeared in the vertical conduit transport piping to the boiler.

As well as in the heat supply subsystem using the thermodynamic properties of the vacuum (pressure drop) occurring in the medium processes, high energy efficiency is achieved in the combined cooling supply subsystem and having common equipment and devices with heat supply (vacuum water pump, water separator with a heat exchanger for pre-cooling water) subsystem and, the most basic, using heat energy supplied by heat supply subsystem by the evacuated steam for cold production in AWARM with the purpose of water preliminary cooling in a water separator for premises air step-by-step cooling process, as well as the indirect evaporative cooling air coolers use with section walls internal coating with a capillary-porous material (sputtered and sintered bronze or copper powders fixed to the sections walls of woven mesh from stainless wire, microporous plastic, etc.), creating inside depression sections (vacuum) by connecting to the collection cavity and vapor-air mixture removal by continuously operating VWP and putting into operation water and air supply device supply from the air cooler tray to increase capillary-porous material evaporation and wetting intensity, as well as rational, minimized consumption of pre-cooled water from the cooling supply subsystem water-separator, water distribution system input into the system to air coolers, level tank with automatic water level control in the tank and air coolers trays.

The result of heat supply subsystem implementation with a controlled in the subsystem underpressure and condensate return by the steam-water pump is efficiency coefficient increase to 0.9.

The result of indirect evaporative cooling in air coolers with water and air support, water separator with water pre-cooling before being fed to the air cooler from the level tank, through which the dosed chilled water quantity is delivered to the air cooler trays use, leads to an increase in energy efficiency of cold supply subsystems with the indicator EER = 12,5.
Figure 1 shows: subatmospheric heat and cooling supply system layout.
Figure 2 shows: indirect-evaporative cooling air cooler circuit premises air, detailed section A layout.
Figure 3 shows: level tank arrangement with air coolers detailed section B layout.

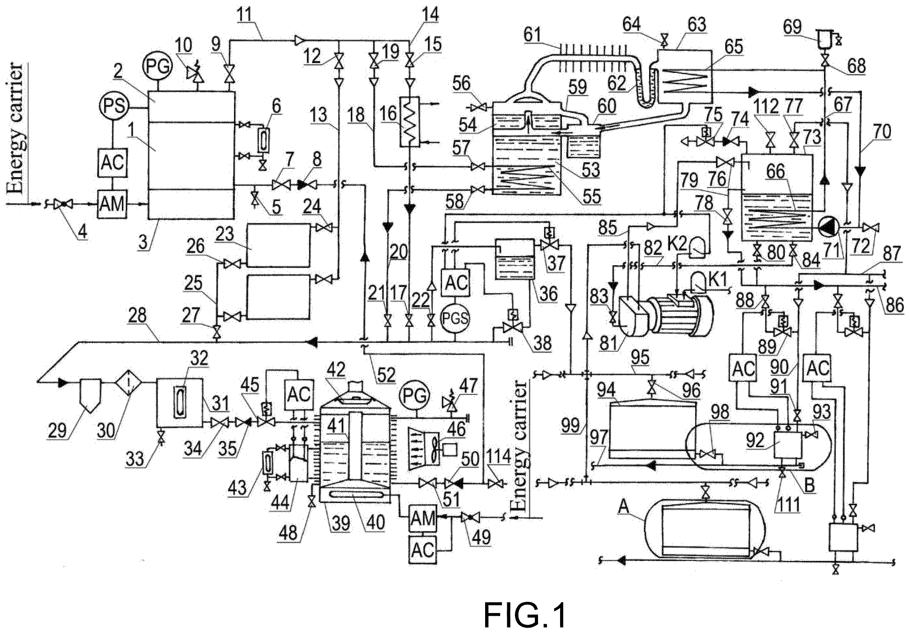

Heat and cold supply subatmospheric system includes (see Figure 1) subsystems: heat supply by the evacuated steam and cooling supply with the non-pump AWARM station and outside air indirect evaporative cooling air coolers.
1. Heating heat supply subsystem, hot water supply and ammonia strong solution heating with water in the generator (boiler) includes: steam boiler 1, steam collector 2, furnace device 3, plug valve for energy carrier supply 4, valve for boiler filling with water and drainage 5, a water gauge with a water-measuring glass 6, valve 7, check valve 8, steam supply valve in the heat supply subsystem 9, safety valve 10, pressure gauge (PG), pressure sensor (PS), energy carrier automatic control and blockage, actuating mechanism (AM); steam and condensate distribution system in which the central distribution steam manifold 11, valves 12, vertical diverting steam lines 13, steam line to supply steam to the heat exchanger for HWS 14, valve 15, HWS heat exchanger 16, valve for condensate removing 17; AWARM heater steam and condensate distribution system, in which is the vapor supply line to the AWARM generator heater (boiler) 18, steam supply valve 19, condensate line 20, valve 21; heat transfer system to the premises in which are the heating devices 23, valves for temperature quantitative control of steam consumption 24, vertical condensate lines 25, valves 26, valves 27, central condensate collecting line for condensate collection from the entire steam and condensate system 28; condensate collection device comprising a mud collector 29, filter screen 30, condensate collection tank 31 with a water indicator 32, drain valve 33, valve 34 and check valve 35; device for creating a vacuum-controlled vacuum (pressure drop) that includes: valve 22 whereby air and condensate part are removed from the central condensate line to the air separator 36, solenoid valve 37 "normally closed" to communicate with the air-discharge line by vacuum water-ring pump, Magnetic valve 38, "normally open", electric contact pressure gauge (PGS) and automatic control unit (AC); device for collecting and lifting the condensate into the steam boiler by a steam-water pump (SWP) 39 with cooling fins, which includes: burner device 40, inner chimney pipe 41, back draft safety lock 42, water gauge with water glass 43, level gauge column with conductometric sensors 44, solenoid valve "normally closed" 45, axial fan 46 for pump casing walls cooling, safety valve 47, 48 drain valve for pump pre-charging with water, cork valve 49, non-return valve 50, emergency valve 51, pipeline condensate rising and supply to the boiler 52, drain valve 114, pressure-and-vacuum gage and automatic control unit (AC) which controller is the level indicator.
2. Cooling supply subsystem consists of: pumpless AWARM (absorbing water-ammonia refrigeration machine), which includes generator (heater) consisting of separating the strong aqueous ammonia solution 53 and separating the weak solution 54, heat exchanger 55 servicing as strong heater, vacuum valve for refilling the installation with water-ammonia solution 56, valve 57 for heating steam supplying, valve 58 for condensate removing from the heat exchanger, connection tube 59, absorber 60, condenser 61, siphon 62 liquefied ammonia collection, evaporator 63, vacuum tap 64 for AWARM internal cavity vacuuming, heat exchanger 65 for cooling water in the water separator; devices for saturated water vapors coming from air coolers evacuation and condensation and including: water separator 73, heat exchanger 66 for condensed water vapor cooling from air coolers, piping 67 for supplying heated water to the evaporator heat exchanger, expansion tank, valve 68, expansion tank 69, chilled water return line 70, circulation pump 71, drain valve 72, check valve 74, a "normally closed" solenoid valve 75 for system venting from heat supply to the atmosphere, valve 76 to bypass the evacuated steam-air mixture from the heat supply subsystem and saturated water vapors of the air coolers, valve 77 for air supplying to the central distribution air conduit, the excess water removal, valve 78, excess water removal, vertical pipe 79, valve 80, the vacuum water-ring pump 81, water supply piping 82 to VWP, valve 83, valve 84, piping 85 for steam-air mixture transporting, cooled water central distribution pipeline 86, central distribution air 87, valve 112 for water separator pre-charging 73 with water; air-cooling facilities station, which includes: valve 88 for supplying chilled water to air coolers, solenoid valves "normally closed" 89, vertical distribution pipes 90 for air and water supply to level tanks, valves for adjusting supplied water and air flow rate 91, level water tanks 92, valves 93, indirect-evaporative cooling air cooler 94, horizontal saturated wet vapor discharge piping 95, valves 96, horizontal pipelines 97 for supplying chilled water to air coolers, valves 98, central vertical piping 99 for supplying a steam-air mixture to the suction body of VWP, valve 111 for level gauge tank pre-filling and air separators trays with distilled or softened water.

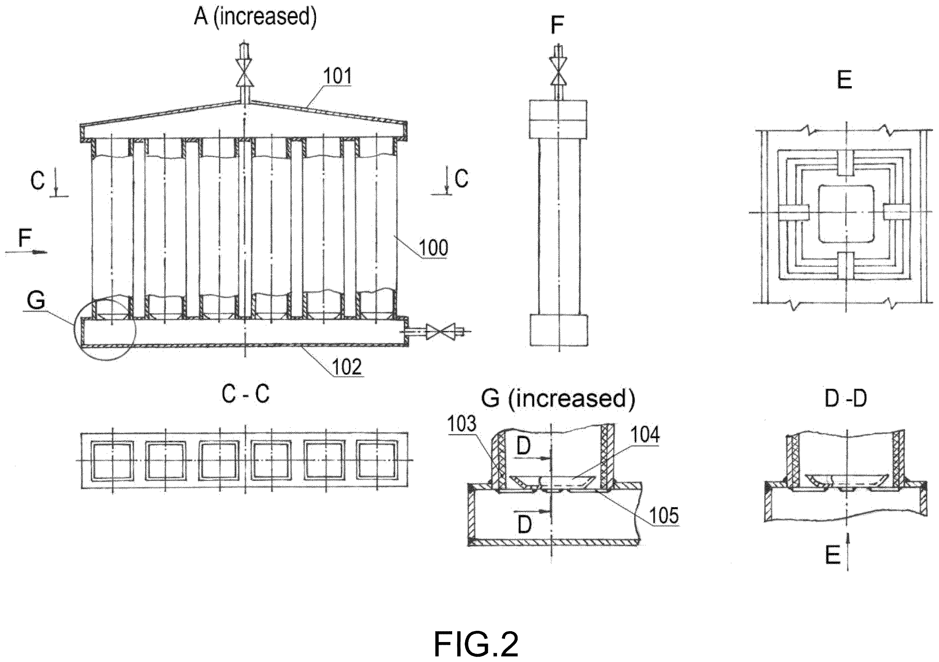

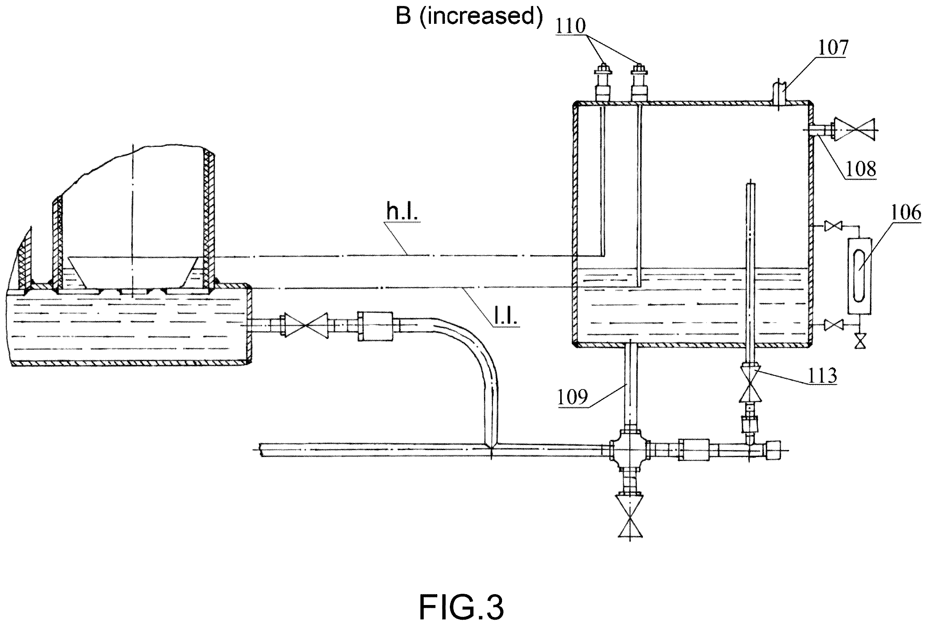

We give a more detailed description of the air cooler structures and the level gauge tank, as well as the layout of their joint installation (see Figures 2 and 3); air cooler 94 consists of: 100-capillary-porous coating sections 103, cavity for collecting and discharging of steam-air mixture mix 101, chilled water storage tray 102, cup-shaped back-up device 104, suction and wetting capillary-porous structure of sections walls for water evaporation between the upper edge of the cup-shaped backup device and the inner surface of the capillary-porous coating along the entire perimeter is 0.5-0.7 mm), fasteners 105; level measuring tank (see Figure 3), which includes: the tank itself, water gauge 106, nozzle 107 for chilled water and air receiving, nozzle 108 for the excess air preliminary removal during the cooling subsystem start-up, water supplying nozzle 109 to the cooling air coolers supply piping, valve 113 of air admission from the leveling tank cavity for pressure balancing of the air coolers trays and level gauge tank internal cavity, conductivity sensor 110 for upper monitoring (UL) and lower (LL) water levels

It should be specially noted that, in order to achieve entire system satisfactory level of tightness, after installation is required to perform each subsystem mandatory leak test by test medium of 99% air + 1% helium, with test pressure of 0.6 MPa. Use helium leak detector to control leakages.

Heat and cold supply subatmospheric system (in case of connection of two subsystems in operation at once) is operating as follows: plug valves 4, 49 to be put in the "closed" position, valves 5, 19, 33, 48, 56, 64, 72, 80, 83, 93, 111, 112, 114 to be put in the closed position, valves 7, 9, 12, 15, 17, 21, 22, 24, 26, 27, 34, 51, 57, 58, 68, 76, 77, 78, 84 , 88, 91, 96, 98, 113 (see Fig. 1 and Fig. 3) to the position "open".

Connect flexible hose from the tank with softened water to valve 5, turn the valve to the "open" position, fill the boiler with water, to the upper level of the boiler water area, through the water gauge 6, after the filling, bring the valve 5 to the "closed" position. Connect the flexible hose to the steam-water pump valve 48 and bring it to the "open" position, fill the pump with water to the upper working level through the water gauge 43, turn the valve to the "closed" position, and disconnect the hose. Connect the flexible hose to the level gauge tank valve 111, bring the valve to the "open" position, fill with softened water to the upper level (UL) of the level gauge tank through the water gauge 106, turn the valve to the "closed" position, disconnect the flexible hose.

Connect the flexible hose to the valve 72, turn the valve to the "open" position, fill the internal cavity of the heat exchangers 65, 66 with water, until the overflow through the expansion tank valve 69, after filling, turn the valve 72 to the "closed" position, disconnect the flexible hose.

Connect the flexible hose to the valve 112, turn the valve to the "open" position, fill with water until the overflow through the valve 78 and the vertical piping 79 into the central distribution water pipe of the cooled water 86, after filling, bring the valve to the "closed" position, disconnect the flexible hose.

Prepare the AWARM into operation in the following order: perform refrigerating machine one-time evacuation of the internal cavity with an auxiliary rotary vacuum pump by means of a vacuum valve 64 with a vacuum value of 0.07 MPa or up to an absolute pressure of 0.03 MPa, after evacuation, filling by means of a valve 56 with a strictly dosed volume of a concentrated aqueous ammonia solution

After completion of the above-mentioned preparatory activities, the entire system is started up in stages:
Stage 1. Heat supply subsystem vacuuming and cooling supply subsystem putting into operation is carried out in the following order: energizing of all automatic control systems, regulation and blocking; vacuum water ring pump (VWP) electric motor connection to the power line by means of the relay K1, which provides a constant (not controlled by the automation system controllers) pump operation; turn the valve 83 to the "open" position, fill the VWP cavity with water, turn on the pump; set on electric contact pressure gauge (PGS), the value of required pressure in the system Pᵥ = 0.03 MPa or P_{abs} = 0.07 MPa, and the automatic control unit (AC) will bring the valves 37, 75 to "open" position, and valve 38 into "closed" position (to prevent air and water from flowing during the creation of a vacuum in the central condensate line), control for required vacuum achievement according to the pressure gauge (PG) readings installed on the boiler steam tank, when the required vacuum is reached automatics will bring the valves 37, 75, 38 to the starting position; under VWP further operation, the steam-air mixture is continuously removed from the air coolers sections, where a vacuum is created due to the device for supporting water and air coming from the level tanks 92, pumped air with some water quantity, the mixture enters the water separator 73, where condensation of saturated vapors occurs and air return to level tanks.
Stage 2. Boiler and steam-water pump start-up is carried out as follows: steam boiler plug valve 4 and the plug valve 49 of the SWP to be lead to the "open" position, turn on the burner devices, connect steam boiler automatic control unit and the energy supply blocking device, set to maintaining an absolute steam pressure in the boiler of not more than 0.07 MPa and SWP automatic control unit of the automatic control system serving only to block the energy supply (in the event of a failure in the gas supply); switch on the steam-water pump housing cooling fan 46;
   the steam produced by the steam boiler flows through the valve 12 into the heating system, and through the valve 15 into the hot water supply system; after the heat energy transfer to the steam consumers, the condensate formed in this way through the central condensate line enters the condensate collection tank 31 and then through the solenoid valve 45, which is brought to the "open" position when the lower water level reaches the SWP during boiling, after the first displacement of the condensate by the pump, controlled by conductometric sensor and level indicator of the automatic control unit (AC) (pump cavity condensate filling is possible without creating a vacuum inside the vacuum, which is necessary for filling the pump cavity in the prototype), when filling the internal cavity of the SWP with condensate and reaching the upper level controlled by the conductivity sensor, the level indicator sends a signal to valve 45 close; when the condensate is heated to boiling, the formed steam inside the pump forces the condensate through the valve 51 and return valve 50 into the boiler, which is located on the roof version.
Stage 3. Start-up of the pumpless AWARM is performed as follows: valve 19 is brought to the "open" position, and the steam at a temperature of 90 °C transmits its thermal energy through the internal surface of the heat exchanger 55 to the generator compartment (boiler) 53 to the strong aqueous ammonia solution, absorbent-bent-water at the temperature of heating the solution to 90 ° C boils (with the vacuum created inside the AWARM PB = 0.07 MPa, the water vapor saturation temperature is 68.7 °C), water and ammonia vapor flow into the condenser 61, water vapor are condensed earlier (on the walls of the inclined tube) and the condensate starts to flow into the compartment of the weak water-ammonia solution 54, forming a weak ammonia solution in water, the ammonia vapor cooled in a condenser condenses in the form of ammonia liquid and accumulates in the siphon 62, the ammonia liquid enters the evaporator 63 from the siphon, where the heat exchanger 65 is arranged to cool the water in the water separator 73, evaporating in the vapor source, ammonia takes away heat from the walls of both the evaporator and the walls of the heat exchanger, thereby creating a cold, from the evaporator the ammonia vapor enters the absorber 60, there, a weak water-ammonia solution from the upper compartment 54 of the generator is fed to the inclined tube 59, in the absorber, ammonia vapors and a weak solution form a highly concentrated solution which, as the absorber overflows, flows into the generator compartment 53, and the cycle repeats; for the intensive transfer of chilled water from the heat exchanger 65 to the heat exchanger 66 of the water separator 73, the circulation pump 71 is activated (the surface areas of the heat exchangers 65 and 66 are calculated so that the temperature of the chilled water in the water separator 73 is + 15 °C at the outside temperature up to + 35 °C); in the continuous mode of operation of the vacuum water-ring pump from the pipelines 95, the vapor-air mixture removed from the indirect-evaporative cooling air coolers 94 is removed; inside the air coolers sections 100 (see Figure 2), as a result of the vacuum formation by the back-flow device of the water and air flow 104 and increasing the efficiency of evaporation of water with the use of a capillary-porous coating of the inner wall of the cooler sections, the wall section temperature is reduced to +2 °C; the leveling tanks are supplied with chilled water by means of solenoid valves 89, which are brought to the "open" position by the command of the automatic control unit (AC) level indicator, triggered from the conductivity sensor of the lower level (LL), and the position is "closed" from the upper level sensor (UL.) of the level tank 92.

In the case of a heat and cold supply system with the cold supply subsystem shutdown (usually in the winter period), the following operations should be performed: valves 19, 21, 57, 58 and 96 should be brought to the "closed" position, the circulating pump 71 should be in the "turned off' position, turn the valve 72 into the "open" position, produce water discharge from the heat exchangers 65, 66 and expansion tank 69, re-switch vacuum water pump power supply of the water-ring from the relay K1 to the power supply by means of the relay K2, which is controlled from the automatic block of the electric contact pressure gauge (PGS) installed on the central condensate line.

In this case, it should be noted that in this case, the SWP operation will be in the periodic mode, depending on the setting of the electric contact pressure gauge (PGS) with a qualitative control of the working vapor temperature.

In the case of a heat and cold supply system operation in summer, when there is no need for heating of premises, and there is only a need for hot water and cold supply, it is required to switch off steam supply to heating devices (heating elements, radiator, etc) for this purpose valves 12, 27 should be re-set into the "closed" position.

## Claims

1. Subatmospheric system of heat and cold supply including:
a heat supply subsystem comprising:
a steam boiler (1);
a steam and condensate distribution system (11) fluidically connected to said steam boiler (1) to receive steam from the steam boiler (1);
a device for creating a controlled vacuum (22,36,37,28) fluidically connected to said steam and condensate distribution system (11) to receive steam and condensate from said distribution system (11) and to accumulate in therein;
system for transferring heat to the environment fluidically connected to the steam boiler (1);
steam water pump (39) for pumping and raising condensate to the steam boiler;
a first HWS (hot water system) heat exchanger (16) fluidically connected to the steam and condensate distribution system (11) configured to receive steam and condensate from said system (11);
a cooling supply subsystem, comprising:
a pump-free absorption water-ammonia refrigerating machine (AWARM) for use with a water-ammonia solution;
a second heat exchanger (55), fluidically connected to the steam and condensate distribution system (11) and being operatively coupled to said machine (AWARM);
an evaporator (63), comprising a third heat exchanger (65), and a condenser (61), both placed downstream in the pump-free absorption water-ammonia refrigerating machine to evaporate and condense the ammonia solution;
an air cooler unit for cooling indoor air including air coolers (94), configured to create a vacuum and to accumulate a vapor-air solution;
level tanks (92) fluidically connected to the air coolers (94) to supply chilled water therein;
a water separator (73) configured to supply chilled water to the air cooler unit comprising a fourth heat exchanger (66) fluidically connected to the third heat exchanger (65) in such a way to circulate water cooled in the third heat exchanger (65) to the fourth heat exchanger (66) so that the cooling of the third heat exchanger (65) cools the fourth exchanger (66) for precooling of the water inside the water separator (73);
a vacuum water ring pump (81), fluidically connected to the air coolers (94) and the device for creating a controlled vacuum (36);
wherein the vacuum water ring pump (81) comprises an outlet fluidically connected to the water separator (73).

2. The system according to claim 1, wherein the heat supply subsystem comprising an energy supply automatic control configured to block the fuel supply in the event of a fuel shut-off and an automatic control of the air separator electromagnetic valves configured to control when the subsystem is evacuated, depending on the desired operation mode of the vacuum water ring pump, comprising a first relay (K1) and a second relay (K2), wherein relays (K1) and (K2) are used for switching between on and off and vice versa; the cooling supply subsystem is equipped with a solenoid valve to remove excess air through an air separator from the heat supply subsystem, by means of automatic control system (conductometric sensors, level detectors of the automatic control unit, solenoid valves) by filling the level tanks (92) with pre-cooled water.

3. The system according to claim 1, wherein the internal cavity is evacuated in a pumpless absorption water-ammonia refrigerating machine.

4. The system according to claim 1, wherein air cooler (94) is configured to indirectly evaporative cool wherein the internal cavity of the sections is covered with a capillary-porous material.

5. The system according to claim 1, wherein the level tank (92) contains a water level monitoring device and an air supply pipe both configured to balance the water and air pressure of its internal cavity and in the air cooler trays.

6. The system according to claim 5, wherein the water level monitoring device comprises an automation system comprising conductometric sensors, automatic control unit level indicator, and an electromagnetic water supply valve to maintain the required water level.

7. The system according to claim 1, wherein the steam-water pump is configured to generate the working steam when heated from a burner unit and the new portion of water filling into the pump, without creating a vacuum within the pump, only by means of an electromagnetic valve.

8. The system according to claim 7, wherein the steam-water pump contains a system of automatic control of its operation, level-measuring column with conductometric sensors, level indicator of the automatic control unit, solenoid valve, comprising water indicator, automatic control system and burner locking, fan for cooling the pump casing.

## Patentansprüche

1. Subatmosphärisches System zum Liefern von Wärme und Kälte, umfassend:
ein Wärmeliefer-Subsystem, umfassend:
einen Dampfboiler (1),
ein Dampf- und Kondensat-Verteilungssystem (11), welches fluidisch mit dem Dampfboiler (1) verbunden ist, um Dampf von dem Dampfboiler (1) zu erhalten;
eine Vorrichtung zum Erzeugen eines gesteuerten Vakuums (22, 36, 37, 28), welches fluidisch mit dem Dampf- und Kondensat-Verteilungssystem (11) verbunden ist, um Dampf und Kondensat von dem Verteilungssystem zu erhalten und darin zu sammeln;
System zum Übertragen von Wärme zu der Umwelt, welches fluidisch mit dem Dampfboiler (1) verbunden ist;
Dampf-Wasserpumpe (39) zum Pumpen und Anheben von Kondensat zu dem Dampfboiler;
einen ersten HWS (Heißwasser-System)-Wärmetauscher (16), welcher fluidisch mit dem Dampf- und Kondensat-Verteilungssystem (11) verbunden ist, dazu eingerichtet, Dampf und Kondensat von dem System (11) zu erhalten;
ein Kühlliefer-Subsystem, umfassend:
eine pumpenfreie Absorption-Wasser-Ammoniak-Kühlmaschine (AWARM) zur Verwendung mit einer Wasser-Ammoniak-Lösung;
einen zweiten Wärmetauscher (55), welcher fluidisch mit dem Dampf- und Kondensat-Verteilungssystem (11) verbunden und mit der Maschine (AWARM) betriebsmäßig gekoppelt ist;
einen Verdampfer (63), welcher einen dritten Wärmetauscher (65) umfasst, sowie einen Kondensator (61), welche beide stromabwärts der pumpenfreien Absorption-Wasser-Ammoniak-Kühlmaschine platziert sind, um die Ammoniak-Lösung zu verdampfen und kondensieren;
eine Luftkühler-Einheit zum Kühlen von Innenraum-Luft, umfassend Luftkühler (94), welche dazu eingerichtet sind, ein Vakuum zu erzeugen und eine Dampf-Luft-Lösung zu sammeln;
Niveautanks (92), welche fluidisch mit den Luftkühlern (94) verbunden sind, um darin gekühltes Wasser zu liefern;
einen Wasserseparator (73), welcher dazu eingerichtet ist, gekühltes Wasser zu der Luftkühler-Einheit zu liefern, umfassend einen vierten Wärmetauscher (66), welcher mit dem dritten Wärmetauscher (65) in einer derartigen Weise fluidisch verbunden ist, dass in dem dritten Wärmetauscher (65) gekühltes Wasser zu dem vierten Wärmetauscher (66) zirkuliert wird, so dass die Kühlung des dritten Wärmetauschers (65) den vierten Wärmetauscher (66) zum Vorkühlen des Wassers innerhalb des Wasserseparators (73) kühlt;
eine Vakuum-Wasserringpumpe (81), welche fluidisch mit den Luftkühlern (94) und der Vorrichtung zum Erzeugen eines gesteuerten Vakuums (36) verbunden ist;
wobei die Vakuum-Wasserringpumpe (81) einen Auslass umfasst, welcher fluidisch mit dem Wasserseparator (73) verbunden ist.

2. System nach Anspruch 1, wobei das Wärmeliefer-Subsystem eine Energieliefer-Automatiksteuerung, welche dazu eingerichtet ist, die Kraftstofflieferung in dem Fall einer Kraftstoff-Abschaltung zu blockieren, und eine Automatiksteuerung der elektromagnetischen Luftseparator-Ventile umfasst, welche dazu eingerichtet ist, zu steuern, wann das Subsystem evakuiert wird, abhängig von dem gewünschten Betriebsmodus der Vakuum-Wasserringpumpe, umfassend ein erstes Relais (K1) und ein zweites Relais (K2), wobei die Relais (K1) und (K2) für ein Schalten zwischen AN und AUS und umgekehrt verwendet werden; wobei das Kühlliefer-Subsystem mit einem Solenoidventil ausgerüstet ist, um überschüssige Luft durch einen Luftseparator von dem Wärmeliefer-Subsystem mittels eines Automatik-Steuersystems (konduktometrische Sensoren, Niveausensoren der Automatik-Steuereinheit, Solenoidventile) zu entfernen, indem die Niveautanks (92) mit vorgekühltem Wasser gefüllt werden.

3. System nach Anspruch 1, wobei der innere Hohlraum in einer pumpenfreien Absorption-Wasser-Ammoniak-Kühlmaschine evakuiert ist.

4. System nach Anspruch 1, wobei der Luftkühler (94) dazu eingerichtet ist, indirekt zu verdampfungskühlen, wobei der innere Hohlraum der Abschnitte mit einem kapillarporösen Material bedeckt ist.

5. System nach Anspruch 1, wobei der Niveautank (92) eine Wasserniveau-Überwachungsvorrichtung und eine Luft-Lieferleitung umfasst, welche beide dazu eingerichtet sind, den Wasser- und Luftdruck des inneren Hohlraums und in den Luftkühler-Fächern zu balancieren.

6. System nach Anspruch 5, wobei die Wasserniveau-Überwachungsvorrichtung ein Automatisierungssystem umfasst, welches konduktometrische Sensoren, eine automatische Steuereinheit-Niveauanzeige und ein elektromagnetisches Wasser-Lieferventil umfasst, um das benötigte Wasserniveau beizubehalten.

7. System nach Anspruch 1, wobei die Dampf-Wasserpumpe dazu eingerichtet ist, den Arbeitsdampf zu erzeugen, wenn sie von einer Brennereinheit erwärmt wird, sowie den neuen Teil von Wasser, welcher in die Pumpe gefüllt wird, ohne dass ein Vakuum innerhalb der Pumpe erzeugt wird, lediglich mittels eines elektromagnetischen Ventils.

8. System nach Anspruch 7, wobei die Dampf-Wasserpumpe ein System einer automatischen Steuerung ihres Betriebs, eine Niveau-Messsäule mit konduktometrischen Sensoren, eine Niveauanzeige der Automatik-Steuereinheit, ein Solenoidventil, umfassend eine Wasseranzeige, ein Automatik-Steuersystem und eine Brennerverriegelung, ein Gebläse zum Kühlen des Pumpengehäuses enthält.

## Revendications

1. Système subatmosphérique de fourniture de chaleur et de froid comportant :
un sous-système de fourniture de chaleur comprenant :
une chaudière à vapeur (1) ;
un système de distribution de vapeur et de condensat (11) raccordé fluidiquement à ladite chaudière à vapeur (1) pour recevoir de la vapeur provenant de la chaudière à vapeur (1) ;
un dispositif permettant de créer un vide régulé (22, 36, 37, 28) raccordé fluidiquement audit système de distribution de vapeur et de condensat (11) pour recevoir de la vapeur et un condensat provenant dudit système de distribution (11) et pour l'accumuler dans celui-ci ;
un système pour transférer de la chaleur à l'environnement fluidiquement raccordé à la chaudière à vapeur (1) ;
une pompe à eau-vapeur (39) permettant de pomper et de faire monter le condensat jusqu'à la chaudière à vapeur ;
un premier échangeur de chaleur de HWS (système d'eau chaude) (16) raccordé fluidiquement au système de distribution de vapeur et de condensat (11) configuré pour recevoir la vapeur et le condensat provenant dudit système (11) ;
un sous-système de fourniture de froid, comprenant :
une machine de réfrigération à eau-ammoniac à absorption sans pompe (AWARM) à utiliser avec une solution d'eau-ammoniac ;
un deuxième échangeur de chaleur (55), fluidiquement raccordé au système de distribution de vapeur et de condensat (11) et fonctionnellement couplé à ladite machine AWARM ;
un évaporateur (63), comprenant un troisième échangeur de chaleur (65), et un condenseur (61), tous deux placés en aval dans la machine de réfrigération à eau-ammoniac à absorption sans pompe pour évaporer et condenser la solution d'ammoniac ;
une unité de refroidissement d'air permettant de refroidir l'air intérieur comportant des refroidisseurs d'air (94), conçus pour créer un vide et pour accumuler une solution de vapeur-air ;
des réservoirs à niveau (92) fluidiquement raccordés aux refroidisseurs d'air (94) pour fournir de l'eau refroidie dans ceux-ci ;
un séparateur d'eau (73) configuré pour fournir de l'eau refroidie à l'unité de refroidissement d'air et comprenant un quatrième échangeur de chaleur (66) fluidiquement raccordé au troisième échangeur de chaleur (65) de façon à faire circuler de l'eau refroidie dans le troisième échangeur de chaleur (65) jusqu'au quatrième échangeur de chaleur (66) de telle sorte que le refroidissement du troisième échangeur de chaleur (65) refroidit le quatrième échangeur (66) pour pré-refroidir l'eau à l'intérieur du séparateur d'eau (73) ;
une pompe à vide à anneau d'eau (81), fluidiquement raccordée aux refroidisseurs d'air (94) et au dispositif permettant de créer un vide régulé (36) ;
dans lequel la pompe à vide à anneau d'eau (81) comprend une sortie fluidiquement raccordée au séparateur d'eau (73).

2. Système selon la revendication 1, dans lequel le sous-système de fourniture de chaleur comprend une commande automatique de fourniture d'énergie configurée pour bloquer la fourniture de carburant dans le cas d'une coupure de carburant et une commande automatique des vannes électromagnétiques du séparateur d'air configurées pour commander le moment où le sous-système est évacué, en fonction du mode de fonctionnement souhaité de la pompe à vide à anneau d'eau, comprenant un premier relais (K1) et un deuxième relais (K2), les relais (K1) et (K2) étant utilisés pour alterner entre marche et arrêt et vice versa ; le sous-système de fourniture de froid est équipé d'une électrovanne pour éliminer l'excès d'air via un séparateur d'air depuis le sous-système de fourniture de chaleur, au moyen d'un système de commande automatique (capteurs conductimétriques, détecteurs de niveau de l'unité de commande automatique, électrovannes) en remplissant les réservoirs à niveau (92) avec de l'eau pré-refroidie.

3. Système selon la revendication 1, dans lequel la cavité interne est évacuée dans une machine de réfrigération à eau-ammoniac à absorption sans pompe.

4. Système selon la revendication 1, dans lequel le refroidisseur d'air (94) est configuré pour refroidir par évaporation indirecte, où la cavité interne des sections est recouverte d'un matériau poreux-capillaire.

5. Système selon la revendication 1, dans lequel le réservoir à niveau (92) contient un dispositif de surveillance de niveau d'eau et un tuyau de fourniture d'air, tous deux configurés pour équilibrer la pression d'eau et d'air de sa cavité interne et des bacs du refroidisseur d'air.

6. Système selon la revendication 5, dans lequel le dispositif de surveillance de niveau d'eau comprend un système d'automatisation comprenant des capteurs conductimétriques, un indicateur de niveau d'unité de commande automatique, et une vanne de fourniture d'eau électromagnétique pour maintenir le niveau d'eau requis.

7. Système selon la revendication 1, dans lequel la pompe à eau-vapeur est configurée pour générer la vapeur de travail lorsqu'elle est chauffée à partir d'une unité de brûleur, la nouvelle partie d'eau remplissant la pompe, sans créer de vide dans la pompe, uniquement au moyen d'une vanne électromagnétique.

8. Système selon la revendication 7, dans lequel la pompe à eau-vapeur contient un système de commande automatique de son fonctionnement, une colonne de mesure de niveau avec des capteurs conductimétriques, un indicateur de niveau de l'unité de commande automatique, une électrovanne, comprenant un indicateur d'eau, un système de commande automatique et un verrouillage de brûleur, un ventilateur pour refroidir le carter de pompe.
